(19) Europäisches Patentamt
European Patent Office
Office européen des brevets

(11) **EP 3 562 025 A1**

(12) **EUROPEAN PATENT APPLICATION**

(43) Date of publication:
**30.10.2019 Bulletin 2019/44**

(51) Int Cl.:
**H02N 1/04** (2006.01)

(21) Application number: **18198677.9**

(22) Date of filing: **04.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.04.2018 US 201862661403 P**

(71) Applicant: **SABIC Global Technologies B.V.
4612 PX Bergen op Zoom (NL)**

(72) Inventors:
• **ALDUBAYAN, Abdulaziz H.
Thuwal (SA)**
• **TEVTIA, Amit Kumar
Thuwal (SA)**
• **TAYEB, Mohammed Abdulwahab
Thuwal (SA)**

(74) Representative: **Elzaburu S.L.P.
Miguel Angel 21, 2nd floor
28010 Madrid (ES)**

(54) **THIN FILM POLYMERIC RESISTORS FOR ENERGY HARVESTING DEVICES**

(57)     A thin film device and related methods of operation and fabrication are disclosed. An example device may comprise a substrate, a first thin film layer disposed adjacent the substrate, the first thin film layer comprising a resistive polymer, and a second thin film layer disposed adjacent at least a portion the first thin film layer, the second thin film layer comprising a triboelectric material configured to output, based on a contact event, a signal. The first thin film layer may be configured to cause amplification of the signal by providing a resistance between the triboelectric material and a ground.

FIG. 1

**Description**

Technical Field

The disclosure generally relates to thin film devices, and more particularly to thin film devices comprising energy harvesting devices.

Background

Harvesting energies from the ambient environment is a promising approach to relieve the threat of energy depletion. Triboelectric materials have been studied as a potential form of energy harvesting material. Triboelectric materials may harvest energy based on the coupling effect of triboelectric friction and electrostatic induction during the contact/friction process occurring between two triboelectrode materials with opposite polarities.

Although different materials exhibit triboelectric properties, including insulated polymers, such as polytetrafluorethylene (PTFE), nylon, polydimethylsiloxane (PDMS), polyvinylebediethylene fluoride (PVDF), the output performance of such materials is limited. Therefore, conventional resistors are used to enhance the performance. However, the usages of conventional resistors are restricted by their bulky design and non-compatibility to meet future requirements for next generation flexible devices.

Thus, there is a need for improved integration of triboelectric sensors and other energy harvesting devices into thin films.

Summary

A thin film device and the fabrication thereof are disclosed. An example device may comprise a substrate, a first thin film layer disposed adjacent the substrate, the first thin film layer comprising a resistive polymer, and a second thin film layer disposed adjacent at least a portion the first thin film layer, the second thin film layer comprising a triboelectric material configured to output, based on a contact event, a signal. The first thin film layer may be configured to cause amplification of the signal by providing a resistance between the triboelectric material and a ground.

An example method may comprise determining one or more parameters associated with one or more of a voltage specification or a resistance specification. The method may comprise disposing, based on the one or more parameters, a first thin film layer adjacent a substrate. The first thin film layer may comprise a resistive polymer having a resistance based on the one or more parameters. The example method may comprise disposing a second thin film layer adjacent at least a portion of the first thin film layer. The second thin film layer may comprise a triboelectric material configured to output, based on a contact event, a signal. The first thin film layer may be configured to cause amplification of the signal by providing a resistance between the triboelectric material and a ground.

Another example device may comprise a first thin film layer comprising a resistive polymer, a second thin film layer comprising a triboelectric material disposed adjacent at least a first portion of the first thin film layer, and a conductive layer comprising a first electrode and a second electrode. The first electrode may be disposed between the first portion of the first thin film layer and the second thin film layer. The second electrode may be disposed adjacent a second portion of the first thin film layer.

Brief Description of the Drawings

The above-mentioned and other features and advantages of this disclosure, and the manner of attaining them, will become apparent and be better understood by reference to the following description of one aspect of the disclosure in conjunction with the accompanying drawings, wherein:

FIG. 1 shows an example device in accordance with the present disclosure.
FIG. 2 shows another example device.
FIG. 3 shows an example method for fabricating an example device.
FIG. 4 is a graph illustrating resistance and thickness of a polymeric thin film.
FIG. 5 is a graph illustrating output voltage using a conventional resistor.
FIG. 6 is a graph illustrating output voltage using a thin film resistor.
FIG. 7 is a graph illustrating average voltage as a function of resistance for a conventional resistor.
FIG. 8 is a graph illustrating average voltage as a function of resistance for an example thin film resistor.
FIG. 9 is a graph illustrating average voltage as a function of resistance for a conventional resistor and an example thin film resistor.
FIG. 10 shows resistance measurements indicating the example film does not exhibit channeling.

FIG. 11 is graph illustrating resistance values as a function of size of an example thin film resistor.

Detailed Description

The present disclosure can be understood more readily by reference to the following detailed description of the disclosure and the Examples included therein. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

Triboelectric energy harvesting devices have been widely studied to produce electricity by harvesting different kind of mechanical energy, such as human motion, vibration energy, wind energy, water wave energy, air- flow energy, and sound energy etc. Triboelectric frication is a surface charging effect. The energy generated from the triboelectric devices is static electricity caused by friction. This energy is generated from the difference in electrostatic charges caused by contact and separation of two material. Therefore, surface structures, compositions of triboelectric materials, and resistance load are among the important factors to determine the output performance. A resistor may be used to enhance the output performance of the triboelectric material. In conventional triboelectric devices, conventional bulky resistances have been used as load to enhance the output performance.

Attempts have been made to improve the output of triboelectric devices. Numerous attempts to improve output performance have been considered using PEDOT: PSS elastomer as an interconnect layer between the wrinkle-patterned PDMS and the working electrode. It was claimed that such practice would enhance the transport of triboelectric charges and as such, improves the device's practical applicability. In another attempt to improve output performance, a new type of self-powered UV sensor was demonstrated, in which the photo detector was used as external load for the triboelectric nanogenerator (TENG). Since the TENG's output obtained by the load has a direct dependence on the load resistance, the change of the built-in photodetector' s resistance will lead to the change of the measured output amplitudes. These approaches, however, have obvious problems which are overcome by the present disclosure. For example, PEDOT:PSS is sensitive to the atmospheric environment and cannot be processed in open air. PEDOT:PSS also involves the challenges of interface connectivity of PEDOT and PSS nanosized grains. The disclosure provides a different approach. For example, in the present disclosure, the entire device fabrication may comprise a roll-to-roll scalable process unachievable by the other two approaches.

The present invention discloses the development of solution processable thin film resistive polymer comprised in a new proposed device architecture. The resistive polymer may function as a resistor to couple a load to the output of the resistive polymer. P3HT is described herein as an example resistive polymer that may be used as external load resistor to enhance the output performance. The resistive polymer may be tuned to provide varying load resistances by choosing the higher band-gap materials and/or altering the geometry and film thickness. The present invention discloses a process for replacing the conventional resistor used in many triboelectric-based devices. Conventional resistors are too bulky for next generation electronics which are trending toward thin and flexible devices. The novel thin film resistive polymer as disclosed herein may be used in the fabrication of flexible, roll-to-roll process-able, and efficient triboelectric-based devices. Poly(3-hexyl thiophene) (P3HT) disclosed herein is described as an example non-conventional resistive polymer, for a complete replacement of conventional resistor in the triboelectric-based devices. The present disclosure provides a new thin film resistor technology made from polymer materials that is equivalent to the bulky conventional resistor in terms of performance, while having simpler and cost effective structure and design.

The resistive polymer may be fabricated to have different resistances by altering film thickness, geometry, annealing conditions, doping of non-conductive impurities into resistive polymer, and/or the like. Higher band-gap semiconducting polymers may be used to tune the higher resistance value. Using the above approach, these resistive polymers provide an improved solution for process-able devices, which makes thin film resistive polymers more attractive for various applications, such as efficient triboelectric touch sensors and energy harvester devices.

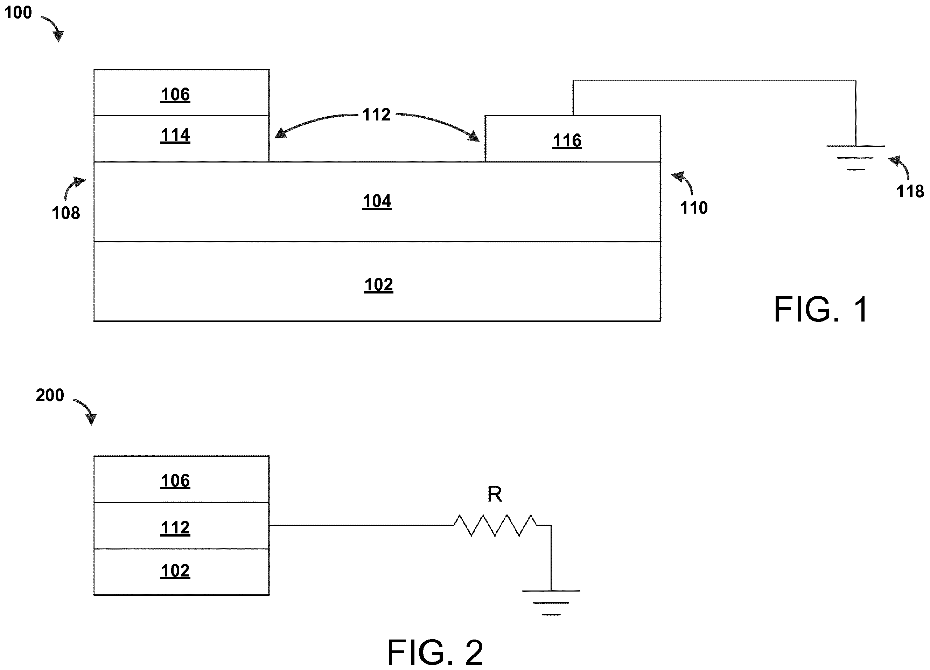

FIG. 1 shows an example device 100 in accordance with the present disclosure. The device 100 may comprise a substrate 102. The substrate 102 may comprise a thin film substrate. The substrate 102 may comprise a transparent material. The substrate 102 may comprise a flexible material. The substrate 102 may comprise a glass material, a plastic material, and/or the like.

The device 100 may comprise a first thin film layer 104. The first thin film layer 104 may be disposed adjacent the substrate 102. The term "adjacent" as used herein means abutting or configured in a stacked configuration with intervening layers and/or gaps. The first thin film layer 104 may be directly on top of the substrate 102.

The first thin film layer 104 may comprise a resistive polymer. The resistive polymer may comprise any polymer that has some resistivity. The resistive polymer may comprise an organic material. The resistive polymer may comprise one or more of a conductive polymer (e.g., organic conductive polymer) or a semiconductive polymer (e.g., an organic semiconductive polymer). The resistive polymer may comprise one or more of polythiophene, Poly(3-hexyl thiophene), Poly(p-phenylene oxide) (PPO), Polyphenylene sulfide(PPS), Poly(p-phenylene vinylene) (PPV), Polyacetylene (PAc), Polyaniline (PA), Polypyrrole (PPy), or Polythiophene (PT). The resistive polymer may be solution processed. The resistive polymer may be based on a solution (e.g., a liquid solution). The resistive polymer may be based on an organic solvent. The solution may comprise a solvent, such as the organic solvent. The solution may comprise a polymer dissolved in the organic solvent.

The device 100 may comprise a second thin film layer 106. The second thin film layer 106 may be disposed adjacent at least a first portion 108 of the first thin film layer 104. The first portion 108 may be separated from a second portion 110 of the first thin film layer 104. The second portion 110 of the first thin film layer 104 may be at an opposite end of the first thin film layer 104 from the first portion 108.

The second thin film layer 106 may comprise an energy harvesting material, such as a piezoelectric material, triboelectric material, solar cell, and/or the like. The energy harvesting material (e.g., triboelectric material) may be configured to output a signal. The energy harvesting material (e.g., triboelectric material) may be configured to output the signal based on a contact event. The energy harvesting material (e.g., triboelectric material) may comprise one or more of polytetrafluorethylene (PTFE), nylon, polydimethylsiloxane (PDMS), polyvinylebediethylene fluoride (PVDF), polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), polyvinylidene chloride-alumina ($PVDC-Al_2O_3$), or fluorinated-polymers. The energy harvester material (e.g., triboelectric material) may be solution processed. The energy harvester material (e.g., triboelectric material) may be based on a solution. The energy harvester material (e.g., triboelectric material) may be based on an organic solvent. The solution may comprise a solvent, such as an organic solvent. The solution may comprise an energy harvester material (e.g., triboelectric material) dissolved in the organic solvent.

The device 100 may comprise a conductive layer 112. The conductive layer 112 may comprise a conductive material, such as a metal. An example conductive material may comprise aluminum. The conductive layer 12 may comprise a first electrode 114. The first electrode 114 may be disposed between the first portion 108 of the first thin film layer 104 and the second thin film layer 106. The conductive layer 112 may comprise a second electrode 116. The second electrode 116 may be disposed adjacent the second portion 110 of the first thin film layer 104. The first electrode 114 may be separated from the second electrode 116 by a gap in the conductive layer 112. The first electrode 114 may be configured to output the signal. The signal may be output to one or more other components, such as a processor, light emitting device, and/or the like. The first electrode 114 may be electrically coupled to the one or more other components.

The first thin film layer 104 may be configured to cause amplification of the signal. The first thin film layer 104 may be configured to supply a resistance such that the signal is amplified. The amplification of the signal may be caused by providing the resistance (e.g., or load) between the energy harvesting material (e.g., triboelectric material) and the ground 118.

As described further herein, the device 100 may have one or more properties based on a design specification, such as a resistance specification or a voltage specification. The design specification may be used to determine one or more parameters (e.g., for forming the device). The first thin film layer 104 may have a shape, size, doping amount, and/or the like based on one or more operational characteristics, such as a specified voltage, current, and/or resistance associated with the device 100. The first thin film layer 104 may comprise a thickness based on a resistance specification. The first thin film layer 104 may be fabricated with a thickness associated with a resistance specification. The first thin film layer 104 may comprise a length, width, and/or other geometry based on the resistance specification.

In some implementations, the first electrode 114 and/or the second electrode 116 may be omitted. For example, the second thin film layer 106 may be disposed directly against (e.g., on top of) the first thin film layer 104. The first thin film layer 104 may be configured to be directly coupled (e.g., without the second electrode 116) to a ground 118. The first thin film layer 104 may be configured to be coupled, via the second electrode 116, to the ground 118. As a further example, FIG. 2 shows another example device 200. FIG. 2 illustrates the structure of a conventional triboelectric sensor. The example device 200 may comprise a conventional resistor (R), which is a bulky resistor in comparison to a thin film. The conventional structure may be improved in a variety of nonconventional ways according to the present disclosure. For example, the resistor R may be replaced with the first thin film layer 104 comprising the resistive polymer. The first thin film layer 104 may be electrically coupled to the conductive layer 112. For example, the first thin film layer 104 may be disposed on a separate substrate or a separate portion of the substrate 102.

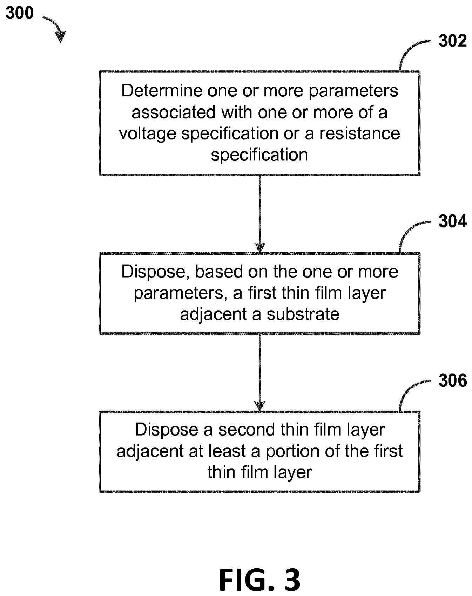

FIG. 3 shows an example method 300 for fabricating an example device. At step 302, one or more parameters associated with one or more of a voltage specification or a resistance specification may be determined. The resistance specification and/or voltage specification may be based on a specified operational characteristics of a device.

A resistive polymer material may be determined based one or more of the voltage specification, the resistance specification, the operational characteristics and/or the like. The resistive polymer may comprise one or more of a conductive polymer or a semiconductive polymer. The resistive polymer may comprise one or more of a polythiophene or a Poly(3-hexyl thiophene).

The one or more parameters may comprise a solution concentration of a solution used to form the resistive polymer (e.g., a film or layer comprising the resistive polymer). The one or more parameters may comprise a temperature, a length of time to apply the temperature, a vacuum pressure associated with annealing the first film layer, and/or the like. In some scenarios, the vacuum pressure may be omitted if the solution can be prepared without a vacuum.

The one or more parameters may be specific to the resistive polymer. For example, different resistive polymers may be associated with different parameters and/or different values for the one or more parameters. The one or more parameters may be known values. For example, a plurality of resistance values may be associated with a corresponding parameter values of the one or more parameters (e.g., in a chart, a database). In some implementations, the one or more parameters may be determined by a characterization process. The characterization process may comprise forming a plurality of thin films using a particular resistive polymer with a variety of parameters. The variety of parameters may comprise solution concentration, length of time, temperature, pressure may result in different lengths, thickness, area, widths, doping amounts, and/or like of the resistive material in the plurality of thin films. One or more values of the parameters may be varied to determine corresponding resistance values, voltage values and/or the like for a particular material and parameter. The plurality of thin films may be analyzed to determine resistive properties of the plurality of thin films. The resistive properties may be used to determine the one or more parameters for a particular device (e.g., which as a specified operational characteristic).

The one or more parameters may be selected to reduce or prevent channeling (e.g., or increase uniformity). The resistive polymer may be free or substantially free of channeling. The channeling may be below a threshold amount (e.g., based on the operational characteristics of the device). The amount of channeling may be related to the substrate. The substrate may be pretreated to reduce or prevent channeling. The pre-treatment may comprise heating of the substrate. The solution concentration, temperature, length of time, and/or vacuum pressure may be selected to reduce channeling.

The one or more parameters may comprise geometric parameters, such as thickness and length of the resistive polymer. As explained further herein, Equation 1, which shows a relationship between length of the resistive polymer and resistance, may be used to determine an appropriate length of the resistive polymer. Equation 1 also shows a relationship between resistivity of the resistive polymer and resistance. The resistivity may be varied by varying the thickness of the resistive polymer. The resistivity may also be varied based on doping of the resistive polymer. Accordingly, specific values of the one or more parameters may be determined, such as length, thickness, doping amount, and/or the like based on the resistance specification and/or voltage specification. In some scenarios, the one or more parameters may be determined based on the geometric parameters.

The one or more parameters may comprise parameters of a deposition process, such as spin coating, spray coating, chemical deposition, physical deposition, doctor plate casting (e.g., doctor blade casting, tape casting), slot di-coating, dip coating, and/or the like. The one or more parameters may comprise a time associated with the deposition process, a temperature associated with the dipositive process, one or more solution concentrations (e.g., or solution amounts) associated with the deposition process, a speed (e.g., revolutions per minute) associated with the deposition process, a pressure (e.g., vacuum pressure) associated with the deposition process, a voltage associated with the deposition process, and/or the like. As an example, disposing, based on the one or more parameters, the first thin film layer adjacent the substrate may comprise disposing the first film layer using a spin coating process. The one or more parameters may comprise a length of time of a spin coating process, a rate of the spin coating process, and/or the like.

As a simple illustration of determining the one or more parameters, a voltage or current output may be specified for an energy harvester to be used in a particular device. The voltage or current output may be used to determine a resistance value for the resistive polymer. The resistance value may be used to determine a particular resistive polymer. The resistance value may be used to determine a thickness, length, and/or area of the resistive polymer. The thickness, length, and/or area may be used to determine one or more parameters of a deposition process. Revolutions per minute, a time to perform the deposition process, a solution concentration, and/or the like may be determined as the one or more parameters. As another example, the one or more parameters may comprise the concentration, annealing temperature, thickness of the resistive polymer layer, uniformity, and/or the like.

At step 304, a first thin film layer may be disposed. The first thin film layer may be deposed based on solution. For example, a solution may be prepared comprising the resistive polymer. The solution may be prepared by dissolving (e.g., fully dissolving) a polymer in a solvent. The solvent may comprise an organic compound. For example, the solvent may comprise tetrahydrofuran (THF), chloroform (CHCl3), dichloromethane (DCM), dimethylformamide (DMF), and/or the like. The solvent may have a low boiling point. The solvent may be volatile. The solvent may have a composition such that the resistive polymer may be fully dissolved in the solvent. The solution may then be disposed (e.g., on the substrate). The first thin film layer may be the first thin film layer 104 of FIG. 1. The first thin film layer may be disposed adjacent a substrate. The first thin film layer may be disposed adjacent a substrate based on the one or more parameters. The first thin film layer may comprise the resistive polymer. The resistive polymer may have a resistance based on the one or more parameters.

At step 306, a second thin film layer may be disposed. For example, a solution may be prepared comprising a triboelectric material. The solution may be prepared by dissolving (e.g., fully dissolving) the triboelectric material in a solvent. The solvent may comprise an organic compound. For example, the solvent may comprise dimethylformamide, tetrahydrofuran (THF), chloroform (CHCl3), dichloromethane (DCM), dimethylformamide (DMF), methyl ethyl ketone (MEK), and/or the like. The solvent may be volatile. The solvent may have a composition such that the triboelectric material may be fully dissolved in the solvent. The second thin film layer may be disposed adjacent at least a portion of the first thin film layer. The second thin film may be the second thin film layer 106 of FIG. 1. The second thin film layer may comprise an energy harvesting material, such as a piezoelectric material, a triboelectric material, a solar cell, and/or the like. The energy harvesting material (e.g., triboelectric material) may be configured to output a signal. The energy harvesting material (e.g., triboelectric material) may be configured to output the signal based on a contact event.

The first thin film layer may be configured to cause amplification of the signal. The first thin film layer 104 may be configured to supply a resistance such that the signal is amplified. The first thin film layer may be configured to cause amplification of the signal by providing a resistance between the triboelectric material and a ground.

The method 300 may comprise disposing a conductive layer. The conductive layer may comprise the conductive layer 112 of FIG. 1 The conductive layer may be disposed after the first layer is disposed on the substrate. The conductive layer may be disposed before the second thin film layer is disposed. The conductive layer may comprise a first electrode (e.g., the first electrode 114). The first electrode may be disposed between the portion of the first thin film layer and the second thin film layer. The conductive layer may comprise a second electrode (e.g., the second electrode 116). The second electrode may be disposed adjacent another portion of the first thin film layer.

## Examples

The following are non-limiting examples to illustrate fabrication of a thin film device as disclosed herein. An example integrated resistive polymer semiconductor combined with triboelectric materials, such as PVDF-TrFe to produce triboelectric energy is demonstrated below. A simple and low-cost method to fabricate the resistive polymer (e.g., P3HT thin film) on glass/plastic (e.g., PET, PEN etc.) substrate may comprise spin coating with an appropriate preparation. Aluminum film was used as electrode material and PVDF-TrFe was deposited as triboelectric active materials on top of the electrode material. To characterize the resultant triboelectric device, an electrometer was used to measure the output voltage. The measurements using the electrometer showed stable and consistent voltage readings (as will be discussed in the results section). Comparatively, a baseline study on a device made of PVDF-TrFe with conventional resistor was carried out with various resistances in order to compare the output performance with the polymeric semiconductor thin film resistor. The results below indicate that using P3HT or a similar resistive polymers as thin film resistor supports new and novel applications in the field of flexible electronics based on triboelectric energy.

A triboelectric material comprising PVDF-TrFe was prepared. The formulation was prepared by adding 1.2g of copolymer PVDF-TrFe to 10 g (10.1 ml) of dimethylformamide (DMF) solution which was then stirred until a clear 12wt % PVDF-TrFe formulation was obtained. A resistive polymer comprising a P3HT Polymeric thin film was prepared. The resistive polymer was prepared by dissolving 60 mg of Poly(3-hexylthiophene) (P3HT) in 4 mL tetrahydrofuran (THF).

Several triboelectric devices were prepared with thin film resistive polymers by varying the spin coating rates to get different thicknesses. A formula was used to calculate the resistance values. After which, many conventional resistors were used with the baseline device for the comparison purposes.

Several example triboelectric sensors comprising a thin film resistor in accordance with the present disclosure were fabricated. 2.5 x 7.5 cm$^2$ glass/plastic substrates were used to build the devices in systematic steps as follows. First, the resistive polymer (P3HT) was spin coated at 1000, 1500 and 2000 rpm on top of the three substrates to obtain the 6.29, 2.095, and 1.21 um thick film, respectively. Second, the P3HT coated substrate was annealed at around 50 °C for 1.5 hrs under vacuum. Next, 120 $\mu$m aluminum film (Al) was partially placed on top of the resistive polymer, as depicted in FIG. 1. This Al film acting as a current collector was placed on two sides and separated by a distance of 4.1 cm. PVDF-TrFE triboelectric active film was spin coated at 1000 rpm on top of one Al film are (2.5 x 2.5 cm2). Finally, the device was annealed at around 55 °C under vacuum for 1.5 hours. To characterize, electrometer system was used to read the output voltage generated by the touch events (applied pressure) on the triboelectric active material.

A conventional triboelectric touch sensor (e.g., as shown in FIG. 2) having a conventional resistor was fabricated for purposes of comparison. 120 $\mu$m Al film acting as electrode was placed on 2.5 x2.5 cm2 glass substrate and PVDF-TrFe was spin coated at 1000rpm to act as the triboelectric active layer. After spin coating, the film was annealed at 55 °C under vacuum for 1.5 hr. The entire device was connected through the Al layer to a conventional resistor (R) of 100, 200, 500, and 1000 M ohms.

The triboelectric charge density could be increased by having a high internal load resistor. The conventional resistors have been used to enhance the output voltage. However, in order to fabricate a non-conventional novel thin film as described herein, a solution processable semiconductor thin film polymeric materials with controllable resistance values was made. Therefore, P3HT was used as polymeric thin film resistor instead of the bulky conventional resistor along with triboelectric active material (e.g., PVDF-TrFE was used in this example). The working principle of the developed nanogenerator device is based on applying mechanical force or pressure in which the P3HT/PVDF-TrFE thin film and the Al-electrode film will come into contact and release modes and as such voltage will be generated.

Characterization of example triboelectric touch sensors

The resistance value of the resistive polymer thin film was calculated according to Equation 1. The resistance (R) is a function of film thickness, resistivity of the semiconductor materials, the distance between the two Al films, and the area of the triboelectric film:

$$R = p \frac{l}{A} \qquad \text{Equation 1.}$$

where R represents resistance, p represents resistivity of Semiconductor Material, 1 represents distance between the two electrodes (e.g., Al films) or length of the resistive polymer, and A represents area of the active triboelectric film.

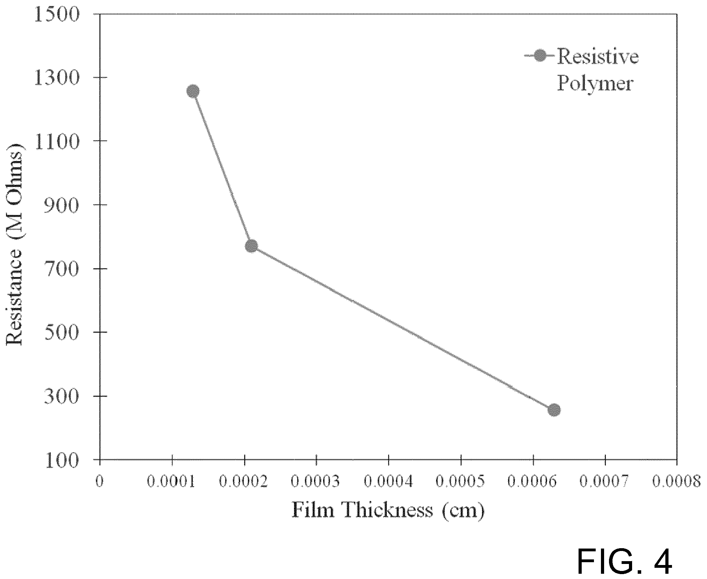

Using Equation 1, the resistance of the resistive polymer was calculated as 257, 770, and 1256 M ohms for 6.29, 2.10, and 1.21 um thickness, respectively as shown in FIG. 4. FIG. 4 shows calculated resistance vs. resistive polymer film thickness. As mentioned earlier, conventional resistors of 100, 200, 500, and 1000 M ohms were used for comparison purposes. As the thickness of the resistive polymer decreases, the resistance will dramatically increase. This change is due to the less current passing through the material.

Both conventional and non-conventional based resistors triboelectric devices were similarly characterized for the output voltage by a keithley 6514 electrometer system. A Lab View software was programed to continuously record all measured voltage data as a function of time.

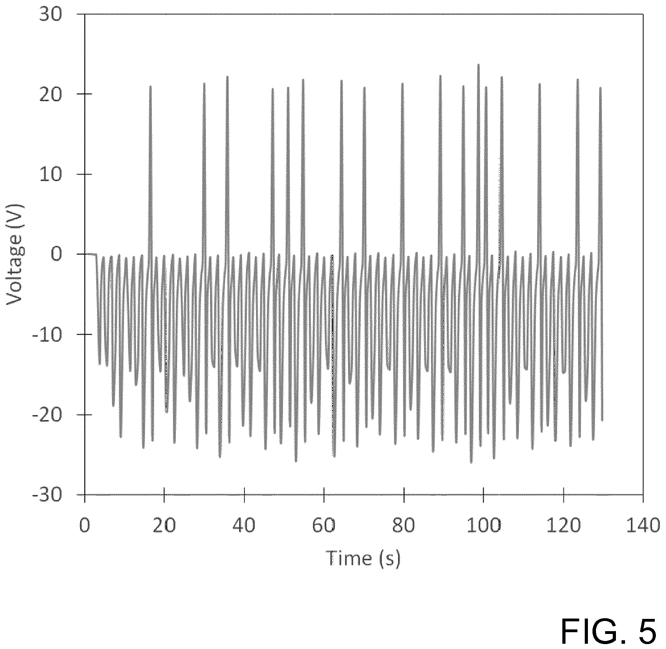

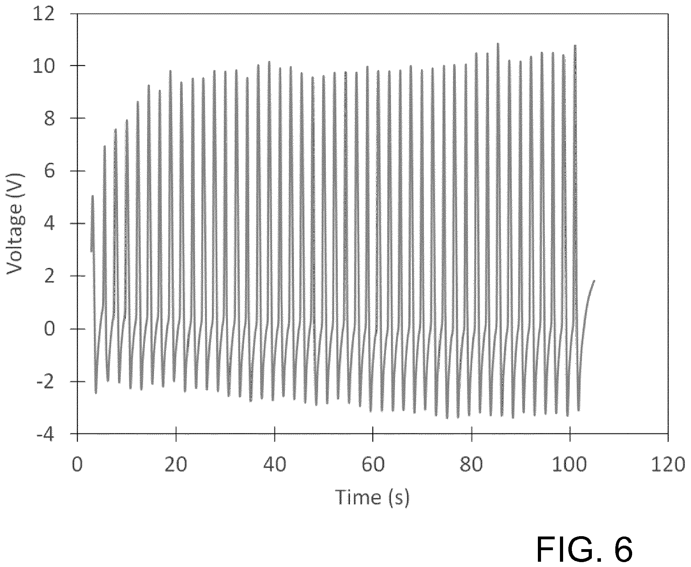

FIG. 5 and FIG. 6 show examples of the output voltage generated by the conventional and thin film resistors, respectively. FIG. 5 shows output voltage generated by touch sensor device connected with 1000 M ohms resistor. FIG. 6 show output voltage generated by touch sensor device integrated with resistive thin film resistor of 257M ohms.

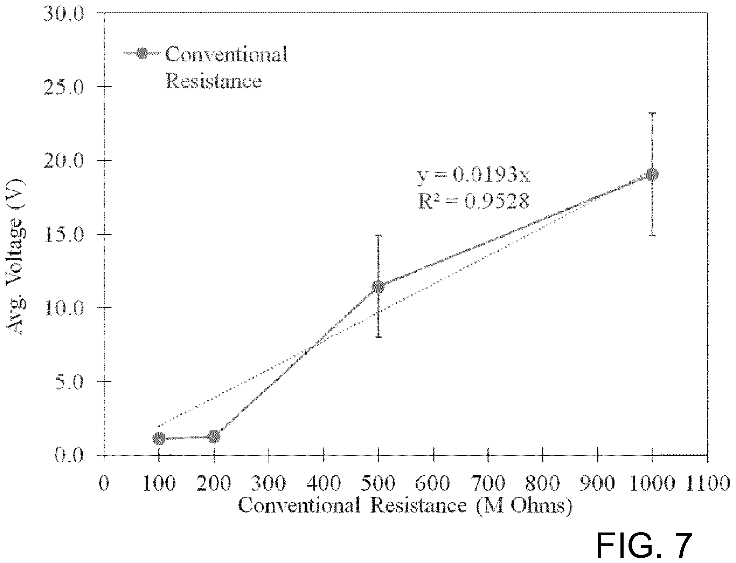

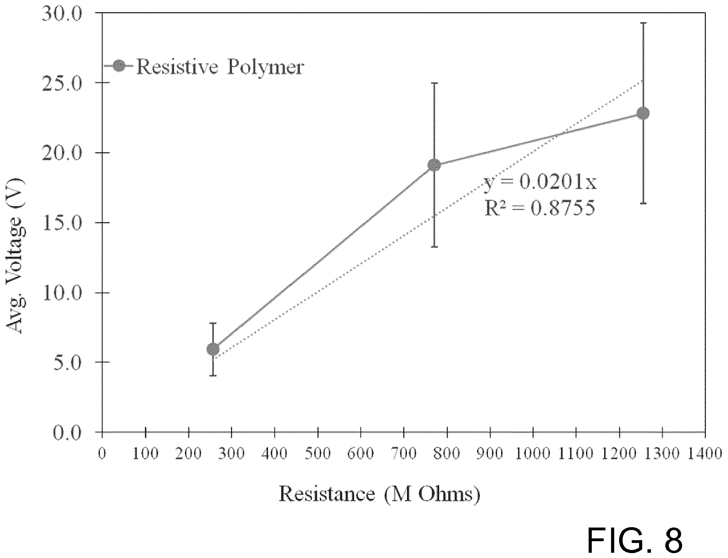

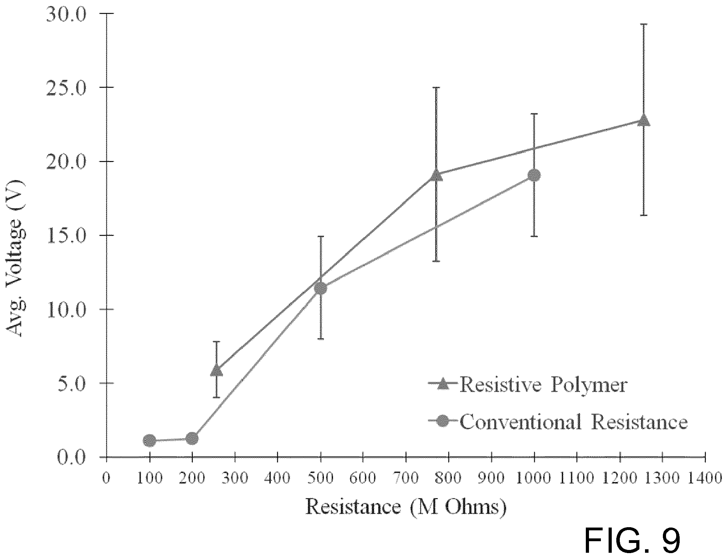

FIG. 7 and 8 show the overall average voltage results of both conventional (FIG. 7) and thin film resistance (FIG. 8) triboelectric devices. Overall, as the resistance increased so did the output voltage. Data linear regression is inserted into both plots and enforced to intercept at the zero y-axis. Both lines show almost similar slope of 0.02 and R2 of more than 0.85 which indicate that both conventional and unconventional resistors work alike (FIG. 9) and the accuracy is relatively high.

It is evident that the thin film resistive polymer shows similar performance as the conventional resistance but with many advantages over the conventional resistors. While conventional resistors are thick, bulky, opaque, and difficult to integrate with thin film devices, the thin film resistance technology described herein is seamless and could easily be integrated in any thin film technologies including wearable devices. Moreover, the device disclosed herein is a cost effective technology compared with state of art resistor technologies. Device fabrication using the developed thin film resistance technology is more convenient and may comprise, for example, two main steps: spin coating and annealing. In contrast, the conventional method requires at least four steps i.e. design and fabricating a photomask, nano-pattering, sputtering a material, and annealing. Thus the present disclosure discloses an improvement over conventional devices.

Resistive Polymer Film Uniformity

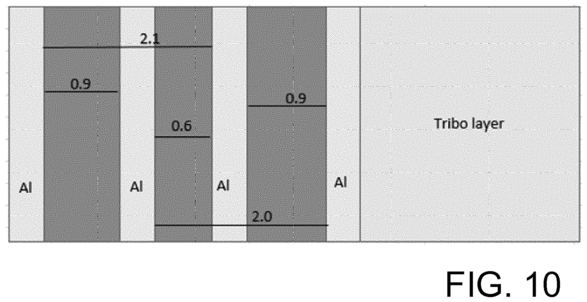

The resistive polymer was shown to have optimal channeling characteristics. For example the resistive polymer may be free of channeling, have channeling below a threshold, and/or the like. The example P3HT resistive polymer was shown to be free of channeling. Channeling, if present, might inhibit subsequent applications. The resistive polymer comprising P3HT film had a length of 4.1 cm with Al taped on both ends to measure the resistivity. To test channeling, several Al tapes were used as shown in FIG. 10 to divide the P3HT film into 6 different sizes (e.g., fixing the width and varying the length). FIG. 10 shows segregated zones by using Al tape for uniformity determination. For each size (length), LCR meter was used to measure the resistance value. Alternatively, Equation 1 is used to calculate the theoretical resistance, for confirmation.

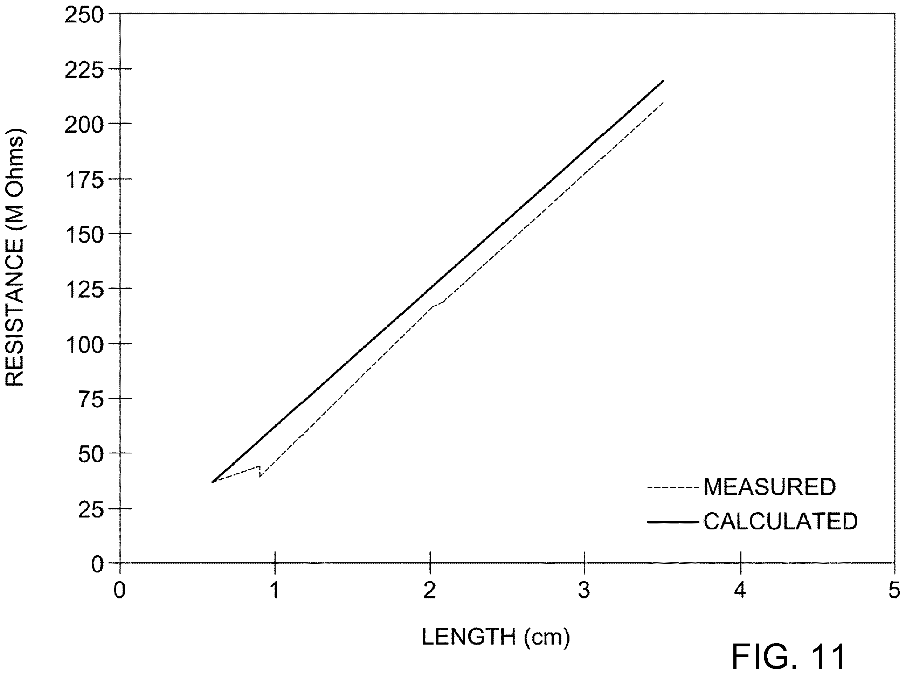

Results are presented in FIG. 11 which shows resistive polymer comprising P3HT resistance values as a function of size (length) (measured & calculated). The differences in measured and calculated values fall below 10% (e.g., within the accepted error, except for one). The trend (e.g., resistance vs. film length) indicates that as size decreases so does the resistance. These findings indicate that the resistive polymer comprising P3HT was uniform and free of any harmful channeling.

The following aspects are disclosed.

Aspect 1. A device comprising: a substrate; a first thin film layer disposed adjacent the substrate, the first thin film layer comprising a resistive polymer; and a second thin film layer disposed adjacent at least a portion the first thin film layer, the second thin film layer comprising a triboelectric material configured to output, based on a contact event, a signal, wherein the first thin film layer is configured to cause amplification of the signal by providing a resistance between the triboelectric material and a ground.

Aspect 2. The device of aspect 1, wherein the resistive polymer comprises one or more of a conductive polymer or a semiconductive polymer.

Aspect 3. The device of any of aspects 1-2, wherein the resistive polymer comprise one or more of a polythiophene or a Poly(3-hexyl thiophene).

Aspect 4. The device of any of aspects 1-3, further comprising a conductive layer comprising a first electrode and a second electrode, wherein the first electrode is disposed between the portion of the first thin film layer and the second thin film layer, and wherein the second electrode is disposed adjacent another portion of the first thin film layer.

Aspect 5. The device of any of aspects 1-4, wherein the triboelectric material comprises one or more of polytetrafluoroethylene (PTFE), nylon, polydimethylsiloxane (PDMS), polyvinylebediethylene fluoride (PVDF), polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), polyvinylidene chloride-alumina (PVDC-Al2O3), or fluorinated-polymers.

Aspect 6. The device of any of aspects 1-5, wherein the first thin film layer is fabricated with a thickness associated with a resistance specification.

Aspect 7. The device of any of aspects 1-6, wherein the contact event comprises a touch event or a press event.

Aspect 8. A method comprising: determining one or more parameters associated with one or more of a voltage specification or a resistance specification; disposing, based on the one or more parameters, a first thin film layer adjacent a substrate, wherein the first thin film layer comprises a resistive polymer having a resistance based on the one or more parameters; and disposing a second thin film layer adjacent at least a portion of the first thin film layer, wherein the second thin film layer comprises a triboelectric material configured to output, based on a contact event, a signal, and wherein the first thin film layer is configured to cause amplification of the signal by providing a resistance between the triboelectric material and a ground.

Aspect 9. The method of aspect 8, wherein the one or more parameters comprise a solution concentration of a solution used to form the resistive polymer.

Aspect 10. The method of any of aspects 8-9, wherein the one or more parameters comprise one or more of a temperature, a length of time, or a vacuum pressure associated with annealing the first film layer.

Aspect 11. The method of any of aspects 8-10, wherein disposing, based on the one or more parameters, the first thin film layer adjacent the substrate comprises disposing the first film layer using a spin coating process, and wherein the one or more parameters comprise a length of time and a rate of the spin coating process.

Aspect 12. The method of any of aspects 8-11, further comprising disposing a conductive layer comprising a first electrode and a second electrode, wherein the first electrode is disposed between the portion of the first thin film layer and the second thin film layer, and wherein the second electrode is disposed adjacent another portion of the first thin film layer.

Aspect 13. The method of any of aspects 8-12, wherein the resistive polymer comprises one or more of a conductive polymer or a semiconductive polymer.

Aspect 14. The method of any of aspects 8-13, wherein the resistive polymer comprises one or more of a polythiophene or a Poly(3-hexyl thiophene).

Aspect 15. A device comprising: a first thin film layer comprising a resistive polymer; a second thin film layer comprising a triboelectric material disposed adjacent at least a first portion of the first thin film layer; and a conductive layer comprising a first electrode and a second electrode, wherein the first electrode is disposed between the first portion of the first thin film layer and the second thin film layer, and wherein the second electrode is disposed adjacent a second portion of the first thin film layer.

Aspect 16. The device of aspect 15, wherein the resistive polymer comprises one or more of a conductive polymer or a semiconductive polymer.

Aspect 17. The device of any of aspects 15-16, wherein the resistive polymer comprise one or more of a polythiophene or a Poly(3-hexyl thiophene).

Aspect 18. The device of any of aspects 15-17, wherein the triboelectric material comprises one or more of polytetrafluorethylene (PTFE), nylon, polydimethylsiloxane (PDMS), polyvinylebediethylene fluoride (PVDF), polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), polyvinylidene chloride-alumina (PVDC-Al2O3), or fluorinated-polymers.

Aspect 19. The device of any of aspects 15-18, wherein the first thin film layer is fabricated with a thickness associated with a resistance specification.

Aspect 20. The device of any of aspects 15-19, further comprising a substrate, wherein the first thin film layer is disposed adjacent a substrate.

**Definitions**

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included and that the description includes compositions that both include and do not include additional additives.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included. As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application. Each of the materials disclosed herein are either commercially available and/or the methods for the production thereof are known to those of skill in the art. It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise. The term "about" as used herein can allow for a degree of variability in a value or range, for example, within 10%, within 5%, or within 1% of a stated value or of a stated limit of a range, and includes the exact stated value or range. The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. While "about" permits some tolerance, a person of ordinary skill in the art would read the specification in light of his knowledge and skill for guidance on the level of that tolerance, and be reasonably apprised to a reasonable degree the metes and bounds of the claims.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "coating" as used herein refers to a continuous or discontinuous layer of material on the coated surface, wherein the layer of material can penetrate the surface and can fill areas such as pores, wherein the layer of material can have any three-dimensional shape, including a flat or curved plane. In one example, a coating can be applied to one or more surfaces, any of which may be porous or nonporous, by immersion in a bath of coating material.

The term "surface" as used herein refers to a boundary or side of an object, wherein the boundary or side can have any perimeter shape and can have any three-dimensional shape, including flat, curved, or angular, wherein the boundary or side can be continuous or discontinuous. While the term surface generally refers to the outermost boundary of an object with no implied depth, when the term 'pores' is used in reference to a surface, it refers to both the surface opening and the depth to which the pores extend beneath the surface into the substrate.

As used herein, the term "polymer" refers to a molecule having at least one repeating unit and can include copolymers and homopolymers. The polymers described herein can terminate in any suitable way. In some embodiments, the polymers can terminate with an end group that is independently chosen from a suitable polymerization initiator, -H, -OH, a substituted or unsubstituted $(C_1-C_{20})$hydrocarbyl (e.g., $(C_1-C_{10})$alkyl or $(C_6-C_{20})$aryl) interrupted with 0, 1, 2, or 3 groups independently selected from -O-, substituted or unsubstituted -NH-, and -S-, a poly(substituted or unsubstituted $(C_1-C_{20})$hydrocarbyloxy), and a poly(substituted or unsubstituted $(C_1-C_{20})$hydrocarbylamino).

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

All publications mentioned herein are incorporated herein by reference to disclose and describe the methods and/or materials in connection with which the publications are cited. The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

**Claims**

1. A device comprising:

   a substrate;
   a first thin film layer disposed adjacent the substrate, the first thin film layer comprising a resistive polymer; and
   a second thin film layer disposed adjacent at least a portion the first thin film layer, the second thin film layer comprising a triboelectric material configured to output, based on a contact event, a signal, wherein the first thin film layer is configured to cause amplification of the signal by providing a resistance between the triboelectric material and a ground.

2. The device of claim 1, wherein the resistive polymer comprises one or more of a conductive polymer or a semiconductive polymer.

3. The device of claim 1, wherein the resistive polymer comprise one or more of a polythiophene or a Poly(3-hexyl thiophene).

4. The device of claim 1, further comprising a conductive layer comprising a first electrode and a second electrode, wherein the first electrode is disposed between the portion of the first thin film layer and the second thin film layer, and wherein the second electrode is disposed adjacent another portion of the first thin film layer.

5. The device of claim 1, wherein the triboelectric material comprises one or more of polytetrafluorethylene (PTFE), nylon, polydimethylsiloxane (PDMS), polyvinylebediethylene fluoride (PVDF), polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), polyvinylidene chloride-alumina (PVDC-Al2O3), or fluorinated-polymers.

6. The device of claim 1, wherein the first thin film layer is fabricated with a thickness associated with a resistance specification.

7. The device of claim 1, wherein the contact event comprises a touch event or a press event.

8. A method comprising:

   determining one or more parameters associated with one or more of a voltage specification or a resistance specification;

disposing, based on the one or more parameters, a first thin film layer adjacent a substrate, wherein the first thin film layer comprises a resistive polymer having a resistance based on the one or more parameters; and disposing a second thin film layer adjacent at least a portion of the first thin film layer, wherein the second thin film layer comprises a triboelectric material configured to output, based on a contact event, a signal, and wherein the first thin film layer is configured to cause amplification of the signal by providing a resistance between the triboelectric material and a ground.

9. The method of claim 8, wherein the one or more parameters comprise a solution concentration of a solution used to form the resistive polymer.

10. The method of claim 8, wherein the one or more parameters comprise one or more of a temperature, a length of time, or a vacuum pressure associated with annealing the first film layer.

11. The method of claim 8, wherein disposing, based on the one or more parameters, the first thin film layer adjacent the substrate comprises disposing the first film layer using a spin coating process, and wherein the one or more parameters comprise a length of time and a rate of the spin coating process.

12. The method of claim 8, further comprising disposing a conductive layer comprising a first electrode and a second electrode, wherein the first electrode is disposed between the portion of the first thin film layer and the second thin film layer, and wherein the second electrode is disposed adjacent another portion of the first thin film layer.

13. The method of claim 8, wherein the resistive polymer comprises one or more of a conductive polymer or a semiconductive polymer.

14. The method of claim 8, wherein the resistive polymer comprises one or more of a polythiophene or a Poly(3-hexyl thiophene).

15. A device comprising:

a first thin film layer comprising a resistive polymer;
a second thin film layer comprising a triboelectric material disposed adjacent at least a first portion of the first thin film layer; and
a conductive layer comprising a first electrode and a second electrode, wherein the first electrode is disposed between the first portion of the first thin film layer and the second thin film layer, and wherein the second electrode is disposed adjacent a second portion of the first thin film layer.

FIG. 1

FIG. 2

EP 3 562 025 A1

300

302

Determine one or more parameters associated with one or more of a voltage specification or a resistance specification

304

Dispose, based on the one or more parameters, a first thin film layer adjacent a substrate

306

Dispose a second thin film layer adjacent at least a portion of the first thin film layer

# FIG. 3

FIG. 4

FIG. 5

FIG. 6

EP 3 562 025 A1

FIG. 7

EP 3 562 025 A1

FIG. 8

FIG. 9

FIG. 10

FIG. 11

EP 3 562 025 A1

Europäisches
Patentamt

European
Patent Office

Office européen
des brevets

# EUROPEAN SEARCH REPORT

Application Number

EP 18 19 8677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/002753 A1 (SABIC GLOBAL TECHNOLOGIES BV [NL]) 4 January 2018 (2018-01-04) | 1-8, 12-15 | INV. H02N1/04 |
| A | * paragraphs [0008] - [0010], [0034], [0039], [0040], [0050] * * figures 3,4A-4C * | 9-11 | |
| Y | US 3,3 01, 707 A (W.E. LOEB AND D.J. VALLEY) 31 January 1967 (1967-01-31) * column 1, lines 10-14 * * column 1, line 33 - line 35 * * claim 1 * | 1,2,4-8, 12,13,15 | |
| Y | BORJIGIN ARONGGAOWA ET AL: "Transparent Conductive Films Fabricated from Polythiophene Nanofibers Composited with Conventional Polymers", POLYMERS, vol. 5, no. 4, 19 December 2013 (2013-12-19), pages 1325-1338, XP055588498, CH ISSN: 2073-4360, DOI: 10.3390/polym5041325 * abstract * * first paragraph; page 1326 * * third paragraph; page 1326 * * page 1333, last paragraph * | 3,14 | TECHNICAL FIELDS SEARCHED (IPC) H02N |

-/--

The present search report has been drawn up for all claims

| Place of search | Date of completion of the search | Examiner |
|---|---|---|
| Berlin | 15 May 2019 | Foussier, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                           
& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 18 19 8677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DEEN M J ET AL: "Electrical Characterization of Polymer-Based FETs Fabricated by Spin-Coating Poly(3-alkylthiophene)s", IEEE TRANSACTIONS ON ELECTRON DEVICES, IEEE SERVICE CENTER, PISACATAWAY, NJ, US, vol. 51, no. 11, 1 November 2004 (2004-11-01), pages 1892-1901, XP011121064, ISSN: 0018-9383, DOI: 10.1109/TED.2004.837389 * abstract * * Paragraph "II. Experimental details", first sentence * * Paragraph "Conclusion" * ----- | 1 | |

TECHNICAL FIELDS
SEARCHED      (IPC)

The present search report has been drawn up for all claims

| Place of search | Date of completion of the search | Examiner |
|---|---|---|
| Berlin | 15 May 2019 | Foussier, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 8677

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2019

| Patent document cited in search report | | | Publication date | Patent family member(s) | | | Publication date |
|---|---|---|---|---|---|---|---|
| WO 2018002753 | | A1 | 04-01-2018 | CN | 109415466 | A | 01-03-2019 |
| | | | | EP | 3478737 | A1 | 08-05-2019 |
| | | | | WO | 2018002753 | A1 | 04-01-2018 |
| US 3,301,707 | | A | 31-01-1967 | ------------------------------------- | | | |

For more details about this annex : see Official Journal of the European Patent Office, No. 12/82

EPO FORM P0459